# EUROPÄISCHE PATENTSCHRIFT

(11) **EP 0 945 614 B1**
(45) Veröffentlichungstag und Bekanntmachung des Hinweises auf die Patenterteilung: **11.08.2004**
(21) Anmeldenummer: 98124100.3
(22) Anmeldetag: 18.12.1998
(51) Int. Cl.: F04B 1/04, F04B 5/02, B60T 8/40

(54) **Kolbenpumpe bzw. Bremsanlage mit Kolbenpumpe**
Piston pump for a vehicle brake system
Pompe à piston pour un système de freinage de véhicule

(30) Priorität: 26.03.1998 DE 19813302
(43) Veröffentlichungstag der Anmeldung: 29.09.1999
(73) Patentinhaber: ROBERT BOSCH GMBH, 70442 Stuttgart (DE)
(72) Erfinder: Alaze, Norbert, 71706 Markgröningen (DE)

(56) Entgegenhaltungen:
- DE-A- 4 102 364
- DE-A- 19 738 524
- US-A- 4 875 741
- US-A- 4 983 100
- US-A- 5 573 386

## Beschreibung

### Stand der Technik

Die Erfindung betrifft eine Bremsanlage mit einer Kolbenpumpe nach den Merkmalen des Anspruchs 1.

Die Kolbenpumpe ist in einer Bremsanlage eines Fahrzeugs vorgesehen zum Steuern des Drucks in Bremszylindern der Fahrzeugräder. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Bremszylinder oder aus mehreren Bremszylindern in einen Hauptbremszylinder (ABS) und/oder zum Fördern von Bremsflüssigkeit aus einem Vorratsbehälter in einen Bremszylinder oder in mehrere Bremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren der Bremszylinder aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Bremszylinder bzw. in die Bremszylinder fördert, wenn ein elektrischer Bremspedalsensor eine Betätigung des Bremspedals erfaßt oder bei der die Pumpe zum Füllen eines Speichers der Bremsanlage dient.

Wichtig ist, daß bei der Bremsanlage in den einzelnen Bremszylindern der Druck unabhängig vom Druck in den anderen Bremszylindern gesteuert werden kann. Deshalb sind üblicherweise bei einem Fahrzeug mit vier Bremszylindern Kolbenpumpen vorgesehen, bei denen jedem der Bremszylinder jeweils ein Pumpenelement mit je einem Pumpenkolben zugeordnet ist Daneben zeigt die US-Patentschrift 4,875,741 eine Bremsanlage, bei der an ein Pumpenelement zwei Bremszylinder angeschlossen sind. Damit jedoch bei dieser Lösung das Druckmedium nicht ungewollt aus einem der Bremszylinder in den jeweils anderen Bremszylinder überströmen kann, wird hier ein Pumpenelement mit zwei Arbeitsdruckräumen verwendet. Einer der beiden Arbeitsdruckräume befindet sich stirnseitig am Pumpenkolben und der jeweils andere Arbeitsdruckraum wird als Ringraum dadurch gebildet, daß der Pumpenkolben mit einer Stufe versehen ist. Bei der in der US-Patentschrift 4,875,741 gezeigten Bremsanlage ist für jeden der Bremszylinder an der Kolbenpumpe je ein eingangsseitiges Rückschlagventil und je ein ausgangsseitiges Rückschlagventil vorgesehen. Während der Pumpenkolben vom Exzenter in das Gehäuse der Kolbenpumpe hineingedrückt wird, wird das Druckmedium aus dem stirnseitigen Arbeitsdruckraum und gleichzeitig aus dem ringförmigen Arbeitsdruckraum über je ein Auslaßventil in einen Auslaßanschluß gedrückt. Wenn dann der Pumpenkolben aus dem Gehäuse wieder ausfährt, vergrößern sich die beide Arbeitsdruckräume und das Pumpenelement saugt das Druckmedium in beide Arbeitsdruckräume an. Dies führt dazu, dass die Pumpe sehr ungleichmäßig arbeitet, wodurch hohe Druckpulsationen entstehen, was mit hoher Geräuschentwicklung verbunden ist.

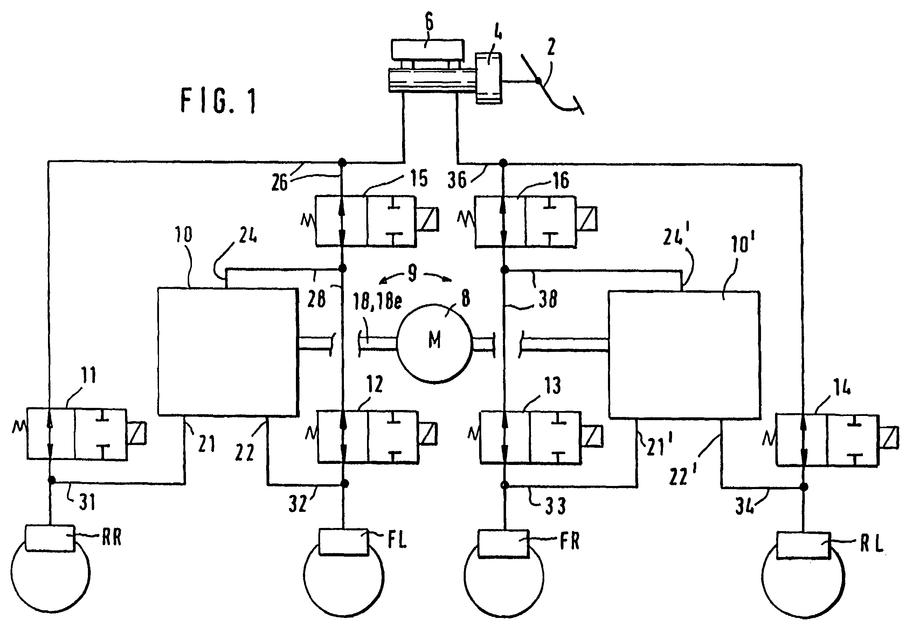

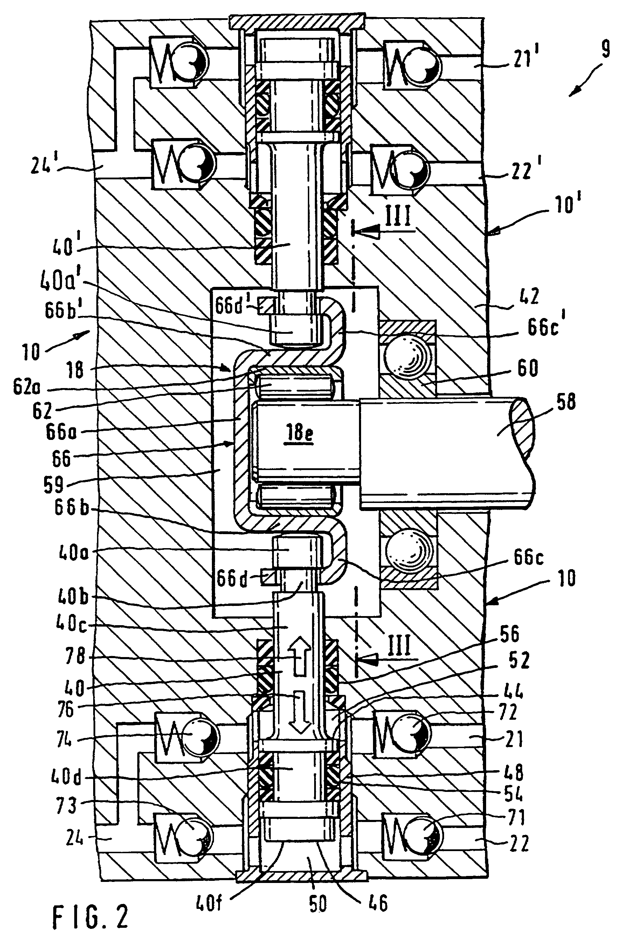

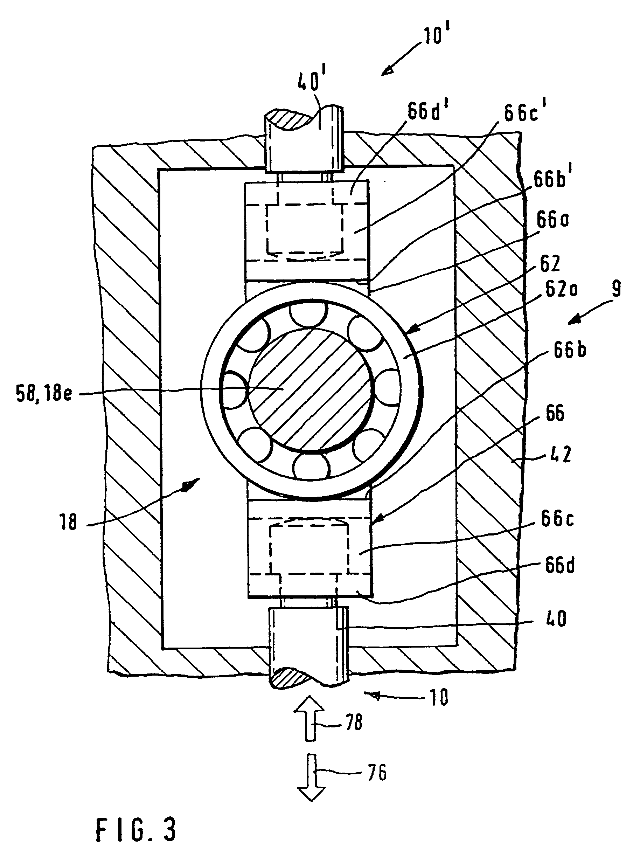

In der DE 41 02 364 A1 sind in den Figuren 1 und 2 Kolbenpumpen mit jeweils zwei Arbeitsdruckräumen offenbart. Es ist nur ein Einlass pro Kolbenpumpe vorgesehen. Der zweite Arbeitsdruckraum wird über einen Abzweig vom Auslaß mit Druckmittel versorgt, wobei im Falle von Figur 1 der Auslaß derselben Kolbenpumpe und im Falle der Figur 2 der Auslaß der gegenüberliegenden Kolbenpumpe an den zweiten Arbeitsdruckraum angeschlossen ist. Die Figuren 3, 4 und 6 zeigen einfach wirkende Kolbenpumpen mit nur einem Arbeitsdruckraum. Figur 5 zeigt zwar eine Kolbenpumpe mit zwei Arbeitsdruckräumen und zwei Einlässen, jedoch sind diese Einlässe hydraulisch zusammengeführt.

Darüber hinaus ist in Figur 1 der DE 197 38 524 A1 eine weitere Kolbenpumpe mit zwei Einlässen bekannt. Auch diese Einlässe sind hydraulisch zusammengeführt und über eine gemeinsame Druckmittelleitung an einen Bremskreis angeschlossen. Der Bremskreis umfasst eine rechte Vorderradbremse und eine rechte Hinterradbremse. Bei der Druckmittelförderung durch die Kolbenpumpe ist damit nicht gewährleistet, dass Druckmittel aus der rechten Vorderradbremse zur rechten Hinterradbremse bzw. umgekehrt überstrom.

### Vorteile der Erfindung

Die erfindungsgemäße Bremsanlage mit den Merkmalen des Anspruchs 1 hat demgegenüber den Vorteil, daß bei Bewegung des Pumpenkolbens die Förderung des Druckmediums aus den beiden Arbeitsdruckräumen phasenverschoben geschieht, wodurch die Förderung des Druckmediums wesentlich gleichmäßiger ist, was zu erheblicher Geräuschreduzierung beiträgt. Weil gleichmäßiger gefördert wird, ist auch die maximale Strömungsgeschwindigkeit des Druckmediums geringer wodurch sich der Wirkungsgrad der Kolbenpumpe verbessert bzw. es können kleinere Leitungsquerschnitte gewählt werden.

Aus Sicherheitsgründen werden bei Bremsanlagen häufig zwei Bremskreise vorgesehen. Aus Sicherheitsgründen ist es wichtig, daß die beiden Bremskreise sauber von einander getrennt sind. Ein wesentlicher Vorteil der vorgeschlagenen Kolbepumpe ist, daß die einzelnen Bremskreise der Fahrzeugbremsanlage sauber voneinander getrennt werden können.

Ein besonderer Vorteil ist, daß die Vergleichmäßigung des Förderstroms trotz geringem Verbohrungsaufwand innerhalb des Gehäuses der Kolbenpumpe erreicht werden kann.

Durch die in den Unteransprüchen aufgeführten Maßnahmen sind vorteilhafte Weiterbildungen und Verbesserungen der Kolbenpumpe und der Bremsanlage möglich.

wird der Übertragungsmechanismus bzw. der Exzenter zwischen dem Antriebsmotor und dem Pumpenkolben so ausgeführt, daß Druck- und Zugkräfte vom Antriebsmotor auf den Pumpenkolben übertragen werden können, so bietet dies den Vorteil, daß eine stark dimensionierte, den Pumpenkolben rückstellende Feder verzichtbar ist.

### Zeichnung

Ein bevorzugt ausgewähltes, besonders vorteilhaftes Ausführungsbeispiel der Erfindung ist in der Zeichnung vereinfacht dargestellt und in der nachfolgenden Beschreibung näher erläutert. Es zeigen die Figur 1 eine Bremsanlage mit einer erfindungsgemäß ausgeführten Kolbenpumpe und die Figuren 2 und 3 unterschiedliche Ansichten und Einzelheiten des Ausführungsbeispiels.

### Beschreibung des Ausführungsbeispiels

Die **Figur 1** zeigt beispielhaft in symbolhafter Form eine bevorzugt ausgewählte Fahrzeugbremsanlage eines Kraftfahrzeugs mit vier Rädern, wobei angenommen wird, daß beispielsweise die beiden Vorderräder von einer nicht dargestellten Antriebsmaschine angetrieben werden können und die beiden Hinterräder können nicht angetrieben werden. Symbolhaft dargestellt sind ein rechtes Hinterrad mit einem durch ein Rechteck symbolisierten Bremszylinder RR, ein linkes vorderrad mit einem Bremszylinder FL, ein rechtes Vorderrad mit einem Bremszylinder FR und ein linkes Hinterrad mit einem Bremszylinder RL. Desweiteren symbolhaft dargestellt sind ein Bremspedal 2, ein Hauptbremszylinder 4, ein ein Druckmedium, vorzugsweise Bremsflüssigkeit, enthaltender Vorratsbehälter 6, ein Antriebsmotor 8, eine Kolbenpumpe 9, ein erstes Sperrventil 11, ein zweites Sperrventil 12, ein drittes Sperrventil 13, ein viertes Sperrventil 14, ein fünftes Sperrventil 15 und ein sechstes Sperrventil 16. Die Sperrventile 11, 12, 13, 14, 15, 16 sind elektrisch steuerbar. Der Antriebsmotor 8 ist ein Elektromotor. Die zu den Sperrventilen 11, 12, 13, 14, 15, 16 und zum Antriebsmotor 8 führenden elektrischen Leitungen sind der besseren Übersichtlichkeit wegen in der Zeichnung nicht dargestellt. Die Kolbenpumpe 9 umfaßt ein erstes Pumpenelement 10 und ein zweites Pumpenelement 10'. Mit Hilfe eines in der Figur 1 durch einen Doppelstrich symbolisierten mechanischen Übertragungsmechanismus 18 kann die vom elektrischen Antriebsmotor 8 erzeugte Antriebsleistung auf die Pumpenelemente 10, 10' übertragen werden, wobei beim ausgewählten Ausführungsbeispiel der mechanische Übertragungsmechanismus 18 ein vom Antriebsmotor 8 rotierend antreibbarer Exzenter 18e ist.

Das erste Pumpenelement 10 hat einen ersten Einlaßanschluß 21, einen zweiten Einlaßanschluß 22 und einen Auslaßanschluß 24. Auch das zweite Pumpenelement 10' hat einen ersten Einlaßanschluß 21', einen zweiten Einlaßanschluß 22' und einen Auslaßanschluß 24'. Somit hat die bevorzugt ausgewählte Kolbenpumpe 9 insgesamt vier Einlaßanschlüsse 21, 22, 21', 22' und zwei Auslaßanschlüsse 24, 24'.

Eine Leitung 26 verbindet den Hauptbremszylinder 4 mit dem Sperrventil 11 und mit dem Sperrventil 15; eine Leitung 28 verbindet den Auslaßanschluß 24 mit den beiden Sperrventilen 12 und 15; eine Leitung 31 verbindet den ersten Einlaßanschluß 21 der Kolbenpumpe 9 mit dem Sperrventil 11 und mit dem Bremszylinder RR des rechten Hinterrads; eine Leitung 32 verbindet den zweiten Einlaßanschluß 22 der Kolbenpumpe 9 mit dem Sperrventil 12 und mit dem Bremszylinder FL des linken Vorderrades; eine Leitung 33 verbindet den Einlaßanschluß 21' mit dem Sperrventil 13 und mit dem Bremszylinder FR des rechten Vorderrades; eine Leitung 34 verbindet den Einlaßanschluß 22' mit dem Sperrventil 14 und mit dem Bremszylinder RL des linken Hinterrades; eine Leitung 36 verbindet den Hauptbremszylinder 4 mit dem Sperrventil 14 und mit dem Sperrventil 16; eine Leitung 38 verbindet den Auslaßanschluß 24' der Kolbenpumpe 9 mit dem Sperrventil 13 und mit dem Sperrventil 16. Die Leitungen 26, 28, 31, 32, 33, 34, 36, 38 sind Hydraulikrohre bzw. Hydraulikschläuche, die das Druckmedium, beispielsweise Bremsflüssigkeit, enthalten.

Über das Bremspedal 2 kann Bremsdruck in den Bremszylindern RR, FL, FR, RL aufgebaut werden. In Abweichung zum über das Bremspedal 2 vorgegebenen Bremsdruck, kann mit Hilfe der Kolbenpumpe 9 der Druck in den Bremszylindern RR, FL, FR, RL abgesenkt oder aufgebaut werden. Wenn beispielsweise das Bremspedal 2 zu stark betätigt wird, dann werden mit Hilfe einer nicht dargestellten Steuerung die Sperrventile 11, 12 ganz oder teilweise in ihre Sperrstellung steuert, und die Kolbenpumpe 9 fördert Druckmedium aus den Leitungen 31, 32, durch die Leitung 28 und durch das geöffnete Sperrventil 15 in den Vorratsbehälter 6. Dadurch sinkt der Druck in den Bremszylindern RR, FL. Durch mehr oder weniger weites Öffnen der Sperrventile 11 und/oder 12 kann dabei der Bremsdruck in jedem der Bremszylinder RR, FL unabhängig vom Bremsdruck im anderen Bremszylinder RR bzw. FL abgesenkt werden. Dabei ist es wichtig, daß das Druckmedium nicht unkontrolliert aus einem der Bremszylinder RR, FL in den jeweils anderen Bremszylinder RR bzw. FL überströmen kann, auch nicht über die Leitungen 31 und 32.

Soll bei nicht betätigtem Bremspedal 2 ein Bremsdruck im Bremszylinder FL des linken Vorderrades aufgebaut werden, dann steuert die nicht dargestellte Steuereinrichtung das Sperrventil 15 in die Sperrstellung und das Pumpenelement 10 der Kolbenpumpe 9 fördert Druckmedium aus dem Vorratsbehälter 6, durch die Leitung 26, durch das geöffnete Sperrventil 11, durch die Leitung 31, über den Einlaßanschluß 21, durch das Pumpenelement 10, über den Auslaßanschluß 24, durch die Leitung 28 und durch das geöffnete Sperrventil 12 zum Bremszylinder FL des linken Vorderrats. Das Pumpenelement 10 fördert dabei Druckmedium auch aus der Leitung 32, über den Einlaßanschluß 22, über den Auslaßanschluß 24 und durch die Leitung 28 zurück in die Leitung 32, so daß dieser kurzgeschlossene Strömungsweg nicht zu einer Veränderung des Drucks führt. Damit dabei aus dem unter hohem Druck stehenden Bremszylinder FL des linken Vorderrads das Druckmedium nicht ungewollt in den unter niedrigem Druck stehenden Bremszylinder RR des rechten Hinterrads strömen kann, ist es wichtig, daß aus der Leitung 32 kein Druckmedium in die Leitung 31 strömen kann, auch nicht innerhalb des Pumpenelementes 10. Dementsprechend muß die Kolbenpumpe 9 gebaut sein.

Die beispielhaft ausgewählte Kolbenpumpe 9 umfaßt das Pumpenelement 10 und das Pumpenelement 10'. Das Pumpenelement 10 ist an die Bremszylinder RR und FL angeschlossen. Entsprechend sind die Bremszylinder FR und RL an das Pumpenelement 10' angeschlossen. Das Pumpenelement 10' ist im wesentlichen gleich gebaut wie das Pumpenelement 10, weshalb sich die nachfolgenden Erläuterungen hauptsächlich auf das Pumpenelement 10 beschränken.

Damit der die Bremszylinder RR und FL und das erste Pumpenelement 10 umfassende erste Bremskreis von dem die Bremszylinder FR und RL und das zweite Pumpenelement 10' umfassenden zweiten Bremskreis sauber getrennt ist, muß darauf geachtet werden, daß auch innerhalb der Kolbenpumpe 9 die beiden Bremskreise unter allen Umständen sicher getrennt sind. Deshalb muß die Kolbenpumpe 9 so gebaut sein, daß auch bei einem eventuellen Ausfall einer Dichtung innerhalb der Kolbenpumpe 9 das Druckmedium sich nicht zwischen den beiden Pumpenelementen 10, 10' austauschen kann.

Die **Figuren 2 und 3** zeigen beispielhaft eine bevorzugt ausgewählte Ausführung der Kolbenpumpe 9. Die Figur 2 zeigt einen Schnitt durch die Kolbenpumpe 9 in der Ebene in der sich die Pumpenkolben 40, 40' und die Antriebswelle 58 befinden. Die Figur 3 zeigt einen Teilschnitt der Kolbenpumpe 9 mit in der Figur 2 mit III markierter Blickrichtung.

In allen Figuren sind gleiche oder gleichwirkende Teile mit denselben Bezugszeichen versehen.

Das Pumpenelement 10 hat einen Pumpenkolben 40, und das Pumpenelement 10' hat einen Pumpenkolben 40'. Der Pumpenkolben 40 befindet sich in den Figuren 2 und 3 in ausgefahrener Stellung; und der Pumpenkolben 40' befindet sich in den Figuren 2 und 3 in eingefahrener Stellung. In den Figuren 2 und 3 ist ein Ausschnitt eines als Gehäuse 42 dienenden Hydraulikblocks geschnitten dargestellt. In dem Hydraulikblock bzw. in dem Gehäuse 42 können beide Pumpenkolben 40, 40' und die Sperrventile 11, 12, 13, 14, 15, 16 integriert sein. Der Antriebsmotor 8 (Fig. 1) ist vorzugsweise an das Gehäuse 42 eingeflanscht. Die beiden Pumpenkolben 40 und 40' sind in dem Gehäuse 42 verschiebbar gelagert. Der Pumpenkolben 40 hat ein dem Exzenter 18e zugewandtes exzenterseitiges Ende 40a, einen Führungsbereich 40c, einen durchmessergrößten Bereich 40d und eine dem Exzenter 18e abgewandte Stirnseite 40f. Zwischen dem exzenterseitigen Ende 40a und dem Führungsbereich 40c gibt es eine Einschnürung 40b.

Weil der Durchmesser des Führungsbereichs 40c kleiner ist als der hydraulisch wirksame Durchmesser des Bereichs 40d wird am Übergang vom Führungsbereich 40c zum Bereich 40d stirnseitig eine hydraulisch wirksame Ringfläche 44 gebildet. Der durchmessergrößte Bereich 40d bildet an der Stirnseite 40f eine hydraulisch wirksame Stirnfläche 46. In das Gehäuse 42 ist eine nach außen hin geschlossene Führungsbuchse 48 dicht und fest eingepresst. Zwischen der Stirnfläche 46 und der Führungsbuchse 48 wird ein erster Arbeitsdruckraum 50 gebildet; zwischen der Ringfläche 44 und der Führungsbuchse 48 wird ein zweiter Arbeitsdruckraum 52 gebildet. Der durchmessergrößte Bereich 40d des Pumpenkolbens 40 befindet sich zwischen dem ersten Arbeitsdruckraum 50 und dem zweiten Arbeitsdruckraum 52. Am Umfang des durchmessergrößten Bereichs 40d ist ein aus mehreren Einzelringen bestehender Dicht- und Führungsring 54 vorgesehen. Der Dicht- und Führungsring 54 dient zur Gleitführung des durchmessergrößten Bereichs 40d des Pumpenkolbens 40 in der Führungsbuchse 48 und zum Abdichten der beiden Arbeitsdruckräume 50 und 52 gegeneinander. Im Gehäuse 42 ist ein weiterer Dicht- und Führungsring 56 vorgesehen. Der Dichtund Führungsring 56 dient zur Gleitführung des Führungsbereichs 40c des Pumpenkolbens 40 und zur Abdichtung des zweiten Arbeitsdruckraums 52 gegenüber einem Hohlraum 59 im Gehäuse 42. In dem Hohlraum 59 befindet sich der Exzenter 18e.

Vom Antriebsmotor 8 (Fig. 1) führt eine Antriebswelle 58 in das Gehäuse 42 (Fig. 2). Die Antriebswelle 58 ist über ein Lager 60 im Gehäuse 42 drehbar gelagert. An der Antriebswelle 58 befindet sich ein exzentrisch zur Drehachse der Antriebswelle 58 vorgesehener Wellenstummel. Der Wellenstummel bildet den Exzenter 18e. Auf dem Wellenstummel befindet sich ein Exzenterlager 62. Das Exzenterlager 62 ist ein Wälzlager mit einem Außenring 62a und mit zwischen dem Außenring 62a und dem exzentrischen Wellenstummel abrollenden Wälzkörpern. Das Exzenterlager 62 ist beispielsweise ein Nadellager mit nadelartigen zylindrischen Stiften als Wälzkörper.

Der Außenring 62a des Exzenterlagers 62 steht im Eingriff mit einer Klammer 66. Die Klammer 66 ist beispielsweise aus einem stabilen Stahlband durch mehrfaches Abbiegen hergestellt. Die Klammer 66 hat einen Mittelbereich 66a, einen Axialbereich 66b, einen Axialbereich 66b', zwei Radialbereiche 66c und 66c' sowie zwei Haltebereiche 66d und 66d'. Bezogen auf die Längsachse der Antriebswelle 58 verlaufen die Axialbereiche 66b, 66b' sowie die Haltebereiche 66d, 66d' axial, und der Mittelbereich 66a sowie die Radialbereiche 66c, 66c' verlaufen radial. Der Axialbereich 66b, der Radialbereich 66c und der Haltebereich 66d befinden sich auf der dem Pumpenkolben 40 zugewandten Seite des Exzenterlagers 62; der Axialbereich 66b', der Radialbereich 66c' und der Haltebereich 66d' befinden sich auf der dem Pumpenkolben 40' zugewandten Seite des Exzenterlagers 62.

Ein Einlaßventil 71 gestattet ein Strömen des Druckmediums aus dem Einlaßanschluß 22 in den ersten Arbeitsdruckraum 50; ein Auslaßventil 73 gestattet ein Strömen des Druckmediums aus dem ersten Arbeitsdruckraum 50 in den Auslaßanschluß 24; ein Einlaßventil 72 gestattet ein Strömen des Druckmediums aus dem Einlaßanschluß 21 in den zweiten Arbeitsdruckraum 52; ein Auslaßventil 74 gestattet ein Strömen des Druckmediums aus dem zweiten Arbeitsdruckraum 52 in den Auslaßanschluß 24. Die in Form von Rückschlagventilen ausgebildeten Ventile 71, 72, 73, 74 verhindern ein Strömen in umgekehrter Richtung.

Der Antriebsmotor 8 kann durch Drehen der Antriebswelle 58 über den Exzenter 18e, über das Exzenterlager 62 und über die Klammer 66 den Pumpenkolben 40 in das Gehäuse 42 hineintreiben (bezogen auf Fig. 2 und 3: Bewegung nach unten) und herausholen (bezogen auf Fig. 2 und 3: Bewegung nach oben). Beim Hineintreiben des Pumpenkolbens 40 in das Gehäuse 42 bewegt sich der Pumpenkolben 40 in die in den Figuren 2 und 3 durch einen Pfeil mit dem Bezugszeichen 76 markierte erste Bewegungsrichtung 76. Die zur ersten Bewegungsrichtung 76 entgegengesetzte Richtung wird nachfolgend als zweite Bewegungsrichtung 78 bezeichnet.

Bei Bewegung des Pumpenkolbens 40 in die erste Bewegungsrichtung 76 verkleinert sich der erste Arbeitsdruckraum 50 und gleichzeitig vergrößert sich der zweite Arbeitsdruckraum 52. Dabei wird aus dem ersten Arbeitsdruckraum 50 Druckmedium durch das Auslaßventil 73 in den Auslaßanschluß 24 gedrückt und gleichzeitig wird dabei Druckmedium aus dem Einlaßanschluß 21 durch das Einlaßventil 72 in den Arbeitsdruckraum 52 gesaugt. Bei entgegengesetzter Bewegung, d. h. beim Antreiben des Pumpenkolbens 40 in die zweite Bewegungsrichtung 78 vergrößert sich der erste Arbeitsdruckraum 50 und gleichzeitig verkleinert sich der zweite Arbeitsdruckraum 52. Dabei wird das Druckmedium aus dem Einlaßanschluß 22 durch das Einlaßventil 71 in den Arbeitsdruckraum 50 gesaugt und gleichzeitig dabei wird Druckmedium aus dem zweiten Arbeitsdruckraum 52 durch das Auslaßventil 74 in den Auslaßanschluß 24 gedrückt.

Man sieht also, daß sowohl bei Betätigung des Pumpenkolbens 40 in die erste Bewegungsrichtung 76 als auch bei Betätigung des Pumpenkolbens 40 in die zweite Bewegungsrichtung 78 Druckmedium angesaugt und in den Auslaßanschluß 24 gefördert wird. Weil dadurch mit dem einen Pumpenkolben 40 relativ gleichmäßig gefördert wird, ist die Änderungsgeschwindigkeit der Strömungsgeschwindigkeit des in den Auslaßanschluß 24 geförderten Druckmediums relativ gering, was sich auf vorteilhafte Weise durch relativ geringe Geräuschentwicklung bemerkbar macht.

Beim dargestellten Ausführungsbeispiel gehören der Exzenter 18e, das Exzenterlager 62 und die Klammer 66 zu dem Übertragungsmechanismus 18, mit dem von der vom Antriebsmotor 8 angetriebenen Antriebswelle 58 sowohl Druckkräfte als auch Zugkräfte auf den Pumpenkolben 40 und auf den Pumpenkolben 40' übertragbar sind. Bei einer Drehung der Antriebswelle 58 in einem bestimmten ersten Drehwinkelbereich wird von der Antriebswelle 58, über den Exzenter 18e, über das Exzenterlager 62, über den Außenring 62a, über den Axialbereich 66b auf das exzenterseitige Ende 40a des Pumpenkolbens 40 gedrückt und der Pumpenkolben 40 wird in die erste Bewegungsrichtung 76 angetrieben, und gleichzeitig zieht der am exzenterseitigen Ende 40a' des zweiten Pumpenkolbens 40' angreifende Haltebereich 66d' der Klammer 66 am Pumpenkolben 40'. Beim Weiterdrehen der Antriebswelle 58 über einen zweiten Drehwinkelbereich wird von der Antriebswelle 58, über den Exzenter 18e, über das Exzenterlager 62, über den Außenring 62a die Klammer 66 in die zweite Bewegungsrichtung 78 getrieben. Was sich bei der Klammer 66 vom Axialbereich 66b', über den Mittelbereich 66a, über den Axialbereich 66b, über den Radialbereich 66c und über den Haltebereich 66d als Zugkraft auf den Pumpenkolben 40 überträgt. Dadurch können Druckkräfte und Zugkräfte von der Antriebswelle 58 über den Exzenter 18e auf den Pumpenkolben 40 übertragen werden.

Wie anhand der Figur 1 erläutert, ist der Einlaßanschluß 22 am Bremszylinder FL des linken Vorderrades angeschlossen, und der Einlaßanschluß 21 verbindet mit dem Bremszylinder RR des rechten Hinterrades. Üblicherweise muß vom bzw. zum Bremszylinder eines Vorderrades mehr Druckmedium als vom bzw. zum Bremszylinder eines Hinterrades gefördert werden. Aus diesem Grund ist das Vorderrad an den ersten Arbeitsdruckraum 50, der die größere Querschnittsfläche hat, angeschlossen, und das Hinterrad ist an den zweiten Arbeitsdruckraum 52, der die kleinere Querschnittsfläche hat, angeschlossen. Dadurch ergibt sich in gewünschter Weise, daß bei jedem Hub des Pumpenkolbens 40 aus dem mit dem Vorderrad verbundenen Einlaßanschluß 22 mehr Druckmedium angesaugt wird als aus dem mit dem Hinterrad verbundenen Einlaßanschluß 21.

## Patentansprüche

1. Bremsanlage mit wenigstens einer Kolbenpumpe, mit mindestens einem in einem Gehäuse in eine erste Bewegungsrichtung (76) von einem Antriebsmotor antreibbaren Pumpenkolben (40), wobei der Pumpenkolben (40) bei seiner Bewegung in die erste Bewegungsrichtung (76) einen ersten Arbeitsdruckraum (50) in dem Gehäuse verkleinert und der Pumpenkolben (40) bei einer Bewegung in eine zur ersten Bewegungsrichtung (76) entgegengesetzte zweite Bewegungsrichtung (78) den ersten Arbeitsdruckraum (50) vergrößert, wobei der Pumpenkolben (40) bei seiner Bewegung in die erste Bewegungsrichtung (76) einen zweiten Arbeitsdruckraum (52) in dem Gehäuse (42) vergrößert und der Pumpenkolben (40) bei seiner Bewegung in die zweite Bewegungsrichtung (78) den zweiten Arbeitsdruckraum (52) verkleinertwobei ein erster Einlass (21 in den ersten Arbeitsdruckraum (50), und ein zweiter Einlass (22) in den zweiten Arbeitsdruckraum (52) einmünden und wobei jeder Einlass (21; 22) mit jeweils einem anderen Bremszylindern (RR, FL ; FR, RL) eines gemeinsamen Bremskreises der Bremsanlage verbunden ist.

2. Bremsanlage nach Anspruch 1, **dadurch gekennzeichnet, dass** der Pumpenkolben (40) vom Antriebsmotor (8) in die zweite Bewegungsrichtung (78) treibbar ist.

3. Bremsanlage nach Anspruch 1 oder 2, **dadurch gekennzeichnet, dass** der Antriebsmotor (8) den mindestens einen Pumpenkolben (40) über einen Übertragungsmechanismus (18) treibt, wobei vom Antriebsmotor (8) über den Übertragungsmechanismus (18) Druckkräfte und Zugkräfte auf den Pumpenkolben (40) übertragbar sind.

4. Bremsanlage nach Anspruch 1 oder 2, **dadurch gekennzeichnet, dass** der Antriebsmotor (8) den mindestens einen Pumpenkolben (40) über einen Exzenter (18e) treibt, wobei vom Antriebsmotor (8) über den Exzenter (18e) Druckkräfte und Zugkräfte auf den Pumpenkolben (40) übertragbar sind.

5. Bremsanlage nach Anspruch 3 oder 4, **dadurch gekennzeichnet, dass** eine die Zugkräfte von einer vom Antriebsmotor (8) antreibbaren Antriebswelle (58) auf den mindestens einen Pumpenkolben (40) übertragende Klammer (66) vorgesehen ist.

6. Bremsanlage nach einem der Ansprüche 1 bis 5, **dadurch gekennzeichnet, dass** der Pumpenkolben (40) einen dürchmessergrößten Bereich (40d) hat, wobei sich der durchmessergrößte Bereich zwischen dem ersten Arbeitsdruckraum (50) und dem zweiten Arbeitsdruckraum (52) befindet.

7. Bremsanlage nach einem der vorhergehenden Ansprüche, **dadurch gekennzeichnet, dass** mindestens ein zweiter Pumpenkolben (40') vorgesehen ist.

## Claims

1. Brake system having at least one piston pump, having at least one pump piston (40) which can be driven in a housing by a driving motor in a first direction of movement (76), the pump piston (40), during its movement in the first direction of movement (76), reducing a first working pressure space (50) in the housing, and the pump piston (40), during a movement in a second direction of movement (78) opposed to the first direction of movement (76), enlarging the first working pressure space (50), the pump piston (40), during its movement in the first direction of movement (76), enlarging a second working pressure space (52) in the housing (42), and the pump piston (40), during its movement in the second direction of movement (78), reducing the second working pressure space (52), a first inlet (21) leading into the first working pressure space (50), and a second inlet (22) leading into the second working pressure space (52), and each inlet (21; 22) being connected to a different brake cylinder (RR, FL; FR, RL) in each case of a common brake circuit of the brake system.

2. Brake system according to Claim 1, **characterized in that** the pump piston (40) can be driven by the driving motor (8) in the second direction of movement (78).

3. Brake system according to Claim 1 or 2, **characterized in that** the driving motor (8) drives the at least one pump piston (40) via a transfer mechanism (18), it being possible for compressive forces and tensile forces to be transferred by the driving motor (8) to the pump piston (40) via the transfer mechanism (18).

4. Brake system according to Claim 1 or 2, **characterized in that** the driving motor (8) drives the at least one pump piston (40) via an eccentric (18e), it being possible for compressive forces and tensile forces to be transferred by the driving motor (8) to the pump piston (40) via the eccentric (18e).

5. Brake system according to Claim 3 or 4, **characterized in that** a clamp (66) which transfers the tensile forces from a drive shaft (58), which can be driven by the driving motor (8), to the at least one pump piston (40) is provided.

6. Brake system according to one of Claims 1 to 5, **characterized in that** the pump piston (40) has a region (40d) of greatest diameter, the region of greatest diameter being situated between the first working pressure space (50) and the second working pressure space (52).

7. Brake system according to one of the preceding claims, **characterized in that** at least one second pump piston (40') is provided.

## Revendications

1. Installation de freinage comprenant au moins une pompe à piston dans laquelle:
- un piston de pompe (40) logé dans un boîtier, peut être entraîné par un moteur d'entraînement dans une première direction de déplacement (76), ce mouvement ayant pour effet de réduire une première chambre de travail sous pression (50) logée dans le boîtier, tandis que le mouvement selon une seconde direction (78), inverse de la première (76) augmente cette chambre (50),
- le mouvement du piston dans la première direction de déplacement (76) augmente une seconde chambre de travail sous pression (52) logée dans le boîtier (42), tandis que le mouvement dans la seconde direction de déplacement (78) diminue cette chambre (52),
- une première entrée (21) et une seconde entrée (22) débouchent respectivement dans la première (50) et dans la seconde chambre (52), chaque entrée (21 ; 22) étant reliée chaque fois à un autre cylindre de freinage (RR, FL ; FR, RL) d'un circuit de freinage commun de l'installation de freinage.

2. Installation de freinage selon la revendication 1,
**caractérisée en ce que**
le piston de pompe (40) peut être entraîné dans la seconde direction de déplacement (78) par le moteur d'entraînement (8).

3. Installation de freinage selon la revendication 1 ou 2,
**caractérisée en ce que**
le moteur d'entraînement (8) entraîne le piston de pompe (40), au nombre d'un au moins, par un mécanisme de transmission (18) capable de transmettre du moteur (8) au piston (40) des forces de poussée et de traction.

4. Installation de freinage selon la revendication 1 ou 2,
**caractérisée en ce que**
le moteur d'entraînement (8) entraîne l'au moins un piston de pompe (40), par un excentrique (18e) capable de transmettre du moteur au piston des forces de poussée et de traction.

5. Installation de freinage selon la revendication 3 ou 4,
**caractérisée en ce qu'**
une pince (66) transmet à l'au moins un piston de pompe (40) les forces de traction issues d'un arbre d'entraînement (58) que peut entraîné par le moteur d'entraînement (8).

6. Installation de freinage selon une des revendications 1 à 5,
**caractérisée en ce que**
le piston de pompe (40) présente une zone (40d) de plus grand diamètre, qui se trouve entre la première (50) et la seconde (52) chambre de travail sous pression.

7. Installation de freinage selon une des revendications précédentes,
**caractérisée en ce que**
il est prévu un second piston de pompe (40').
